(19) Europäisches Patentamt
European Patent Office
Office européen des brevets

(11) **EP 4 361 680 A2**

(12) **EUROPEAN PATENT APPLICATION**

(43) Date of publication:
**01.05.2024 Bulletin 2024/18**

(21) Application number: **23205140.9**

(22) Date of filing: **23.10.2023**

(51) International Patent Classification (IPC):
**G01S 17/58** (2006.01)  **G01S 17/931** (2020.01)
**G01S 11/12** (2006.01)  **G01S 17/10** (2020.01)
**G01S 17/87** (2020.01)

(52) Cooperative Patent Classification (CPC):
**G01S 17/931; G01P 3/36; G01S 11/12;
G01S 17/10; G01S 17/58; G01S 17/87**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022 IT 202200022347**

(71) Applicant: **FERRARI S.p.A.**
**41100 Modena (IT)**

(72) Inventors:
• **SARTONI, Giovanni**
**41100 Modena (IT)**
• **MONTIROSI, Matteo**
**41100 Modena (IT)**
• **SITTA, Ugo**
**41100 Modena (IT)**

(74) Representative: **Studio Torta S.p.A.**
**Via Viotti, 9**
**10121 Torino (IT)**

(54) **MOTOR VEHICLE AND METHOD TO DETECT THE DRIVING SPEED OF THE MOTOR VEHICLE ITSELF**

(57) A motor vehicle (1) comprising a body (2) defining a passenger compartment (3), a plurality of wheels (4, 5); and a first sensor (10) designed to detect a value (v) associated with a driving speed of said motor vehicle (1); the first sensor (10) comprises, in turn: a first emitter (15) configured to emit a first laser signal (R); one or more first single-photon avalanche diodes (SPAD) (11, 111) configured to detect said first laser signal (R) or a second laser signal (S) generated, in use, by the reflection of the first laser signal (R); and a control unit (20) programmed to process the value (v) associated with a driving speed (v) of the motor vehicle (1), based on the first or second laser signal (R, S) detected, in use, by the first photodetectors (11).

FIG. 2

EP 4 361 680 A2

## Description

### CROSS-REFERENCE TO RELATED APPLICATIONS

This patent application claims priority from Italian patent application no. 102022000022347 filed on October 31, 2022, the entire disclosure of which is incorporated herein by reference.

### TECHNICAL FIELD

The invention relates to a motor vehicle and to method to detect the driving speed of the motor vehicle itself.

### BACKGROUND

Motor vehicles further comprise, in a known manner:

- a stability control system, which is operatively connected to the braking system and can be operated, in given operating situations of the motor vehicle, in order to have the braking system exert braking torques, if necessary even different ones, upon the respective wheels, so as to ensure a desired degree of stability of the motor vehicle; and
- an anti-lock system, commonly known as ABS, which is also operatively connected to the braking system and can be operated so as to limit the braking torque acting upon the wheels and prevent the wheels from locking.

The aforesaid systems require, in order to correctly operate, the assessment of a plurality of kinematic and dynamic parameters of the motor vehicle, for example the attitude angle of the motor vehicle.

The assessment of said parameters requires, in turn, the assessment of the driving speed of the motor vehicle.

The driving speed of the motor vehicle needs to be detected as promptly and as precisely as possible, in order to allow for a quick and precise operation of the aforesaid stability control and anti-lock systems.

Therefore, sensors are needed in the automotive industry, which are designed to detect the driving speed of the motor vehicle in a quick, repeatable and precise manner.

### SUMMARY

The object of the invention is to provide a motor vehicle, which is capable of fulfilling the need discussed above.

The aforesaid object is reached by the invention, as it relates to a motor vehicle as defined in claim 1.

Furthermore, the invention also relates to a method to detect the speed of the motor vehicle as set forth in claim 11.

### BRIEF DESCRIPTION OF THE DRAWINGS

The invention will be best understood upon perusal of the following detailed description of two preferred embodiments, which are provided by way of non-limiting example, with reference to the accompanying drawings, wherein:

- figure 1 is a perspective view of a motor vehicle according to the invention with a first motor vehicle driving speed sensor;
- figure 2 schematically shows first components of the first sensor of figure 1;
- figure 3 is a top view of a motor vehicle according to the invention with a second motor vehicle driving speed sensor;
- figure 4 schematically shows some operating steps of the operation of the sensor of figure 1; and
- figure 5 schematically shows some components of the motor vehicle of figures 1 to 4.

### DESCRIPTION OF EMBODIMENTS

With reference to the accompanying Figures, number 1 indicates a motor vehicle comprising a body 2 defining a passenger compartment 3 and a plurality of wheels 4, 5.

Hereinafter, expressions such as "at the top", "at the bottom", "at the front", "at the back" and others similar to them are used with reference to normal driving conditions of the motor vehicle 1.

Furthermore, it is possible to define:

- a longitudinal axis X integral to the motor vehicle 1, which, in use, is horizontal and parallel to a normal driving direction of the motor vehicle 1;
- a transverse axis X integral to the vehicle 1, which, in use, is horizontal and orthogonal to the axis X; and
- an axis Z integral to the vehicle 1, which, in use, is vertical and orthogonal to the axes X, Y.

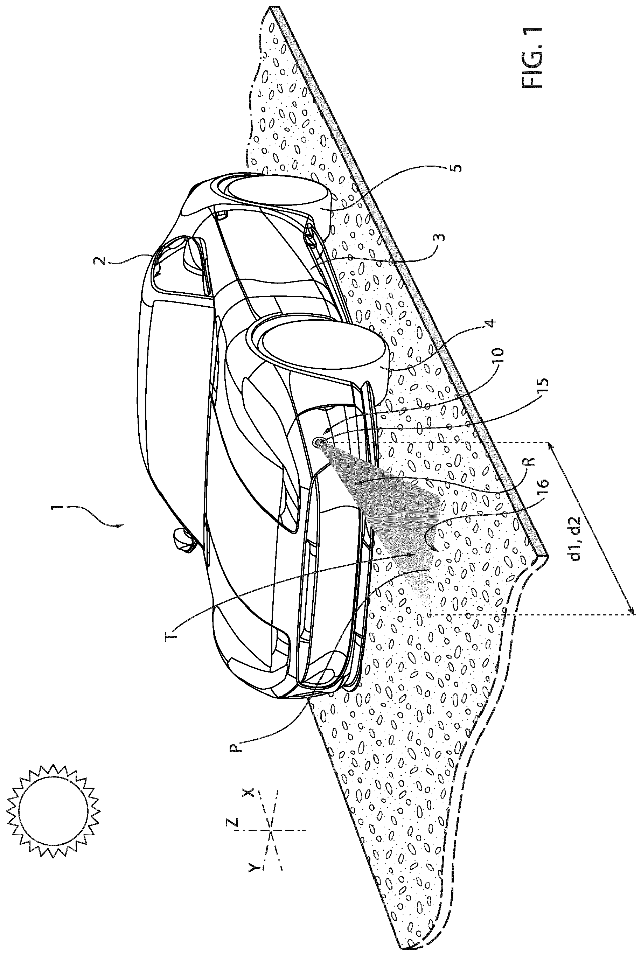

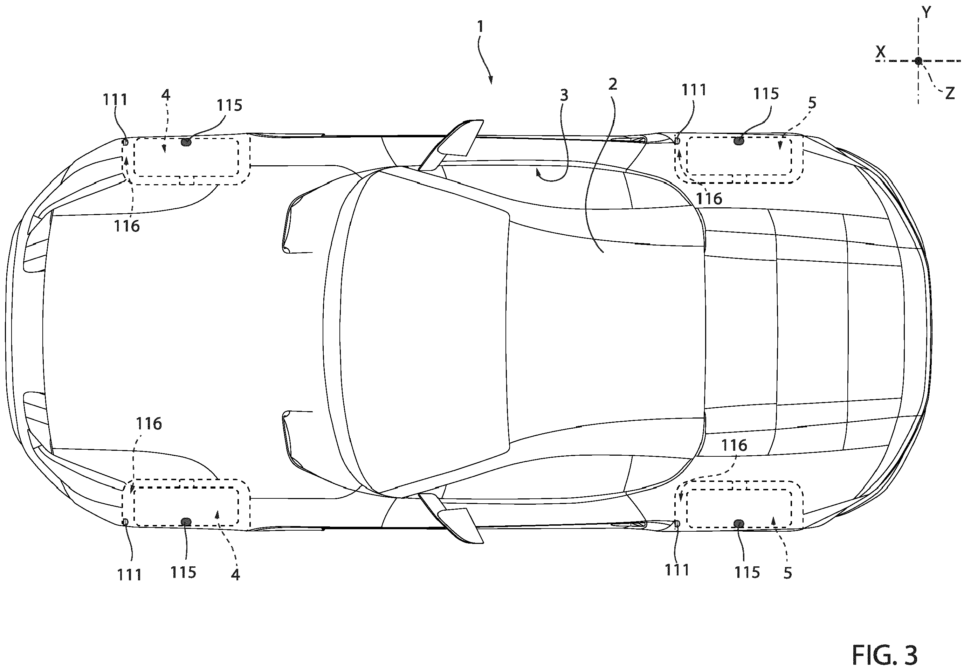

The motor vehicle 1 further comprises a plurality of sensors 10, 110 (schematically shown in respective Figure 1 and 3) designed to detect a driving speed v of the motor vehicle 1.

In the specific case shown herein, the sensor 10, 110 is an optical sensor.

Each sensor 10 advantageously comprises:

- an emitter 15 configured to emit a laser signal R; and
- one or more single-photon avalanche diodes 11a (also known as SPADs) configured to detect a laser signal S reflected by the road surface 16 or the laser signal R itself; and
- a control unit 20 programmed to process the value of the speed v based on the laser signals S; R detected by the single-photon avalanche diodes 11;

More in detail, the emitter 15 and the single-photon avalanche diodes 11 of the sensor 10 are carried by the body 2, preferably by a front portion of the body 2, with reference to a normal driving direction of the motor vehicle 1.

In particular, the emitter 15 is configured so as to emit the laser signal R towards a front area relative to the instantaneous position of the motor vehicle 1.

The emitter 15 and the single-photon avalanche diodes 11 optically face one another without the interposition of opaque elements.

The emitter 15 is configured so as to emit a laser signal R towards the road surface 16.

In particular, the emitter 15 is configured to emit the laser signal R in a pulsed form.

The emitter 15 is configured to emit the laser signal R in a region T having an extension that is also parallel to the axis X.

The single-photon avalanche diodes 11 receive the laser signal S formed by the reflection of the laser signal R on the road surface 16.

By so doing, the emitter 15 and the single-photon avalanche diodes 11 define a LIDAR system.

Following the interaction with the road surface 16, the laser signal R is reflected, as the laser signal S, through mirror-like reflection or Fresnel reflection in one single direction or through reflection by diffuse ration in a plurality of directions.

In particular, the single-photon avalanche diodes 11 generate, as an output, a current i associated with the number of detected photons, namely with the intensity of the laser signal S.

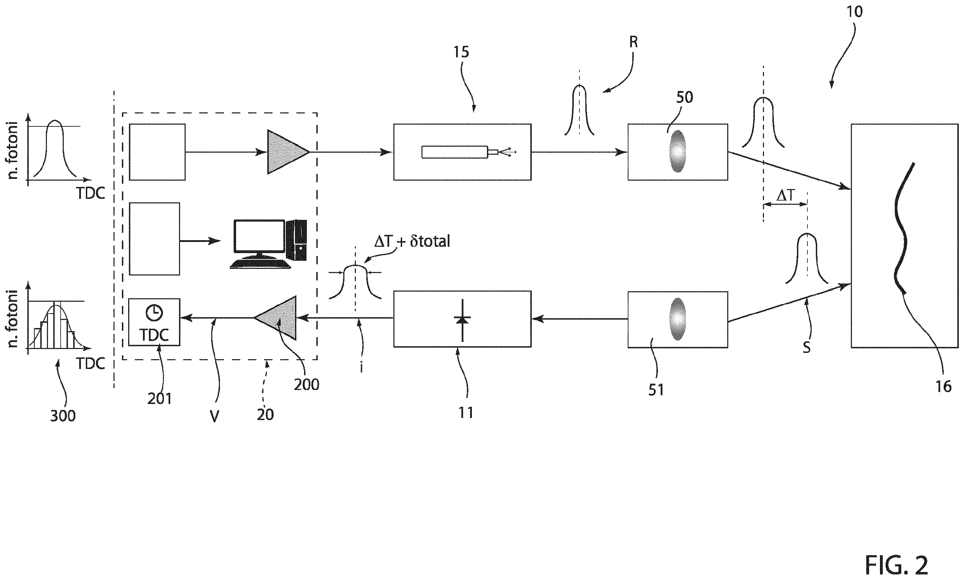

The sensor 10 further comprises (Figure 2):

- an optical system 50 consisting, for example, of a first lens and designed to widen the laser signal R so as to light the road surface 16; and
- an optical system 51 consisting of a second lens and designed to collimate the laser signal S on the single-photon avalanche diodes 11.

The control unit 20 comprises:

- an electronic circuit 200 receiving, as an input, a current i generated by the single-photon avalanche diodes 11 and providing, as an output, a voltage V associated with the current i, said electronic circuit being known and, therefore, not described in detail; and
- a time measuring circuit 201, for example digital time converter, which is configured to provide a time signal associated with the time of arrival of the laser signal S received by the single-photon avalanche diodes 11.

The control unit 20 is programmed to:

- acquire a value of a distance d1 parallel to the axis X between a reference point P on the road surface 16 and the single-photon avalanche diodes 11 in a time instant t1, based on a signal associated with the intensity of the laser signal R detected by the single-photon avalanche diodes 11;

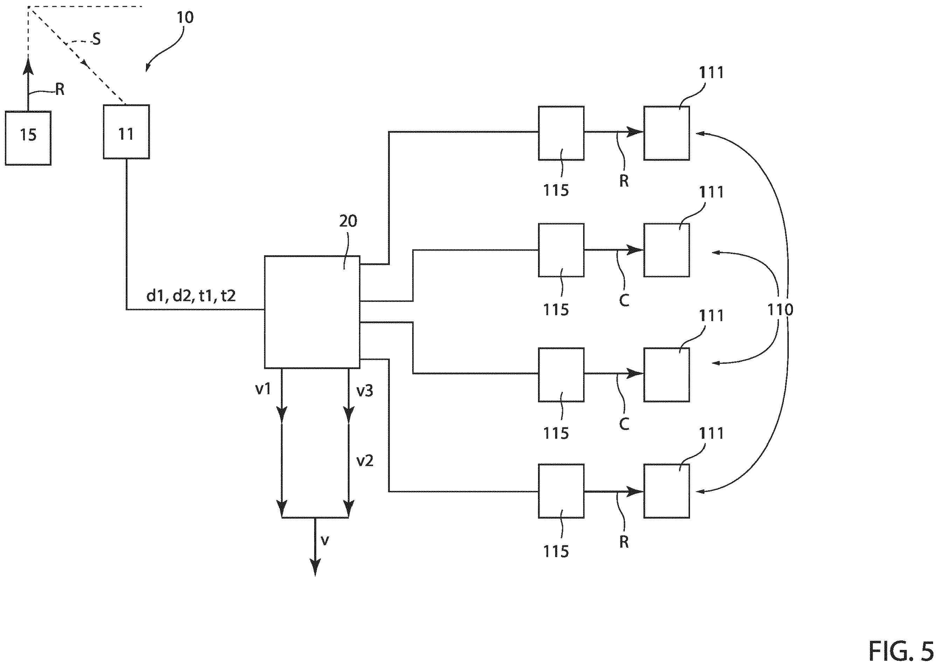

- acquire a value of a distance d2 parallel to the axis X between the reference point P on the road surface 16 and the single-photon avalanche diodes 11 in a time instant t2, based on a signal associated with the intensity of the laser signal R detected by the single-photon avalanche diodes 11; and
- process a first value of a driving speed v1 parallel to the axis X, based on the aforesaid distance values d1 and d2 and on the difference between the time instants t1 and t2 (Figure 5).

More in detail, the first value of the driving speed

$$v1 = \frac{d2-d1}{t2-t1}-$$

V1 parallel to the axis X is obtained as                      .

More in particular, the control unit 20 is further programmed (Figure 2), for each distance d1, d2, to:

- receive an impulse train from the circuit 201;
- represent the aforesaid impulse train as an associated histogram 300 having, on the horizontal axis, the time of arrival and, on the vertical axis, the number of accumulated photons;
- associate a peak of the histogram 300 with a value $\Delta T1$, $\Delta T2$ of the time interval between the emission of the laser signal R and the reception of the laser signal S; and
- measure the distance d1, d2 between the reference point P on the road surface 16 and the single-photon avalanche diodes 11 as $c*\Delta T1$, $c*\Delta T2$, wherein c is the speed of light and $\Delta T1$, $\Delta T2$ is the time interval between the emission of the laser signal R and the reception of the laser signal S.

In particular, the distribution of the times of arrival on the histogram 300 is representative of the uncertainties $\delta_{total}$ affecting the value $\Delta T1$, $\Delta T2$ and deriving from the generation of the laser signal R and from the behaviour of the electronic circuit 200 and of the circuit 201.

Each single-photon avalanche diode 11 is preferably manufactured in the form of a SPAD/CMOS chip. In this way, each single-photon avalanche diode 11 manages to read the information emitted by the emitter 15 at a very high speed.

Hence, the sensor 10 creates a configuration known in the automotive industry as "direct time of-flight (DTOF)".

In the specific case shown herein, the emitter 15 is a VCSEL (Vertical Cavity Surface Emitting Laser) source, namely a surface emitting laser source with a vertical cavity. The reference point P is determined by the inclination of the emitter 15 relative to the plane of the road surface 16.

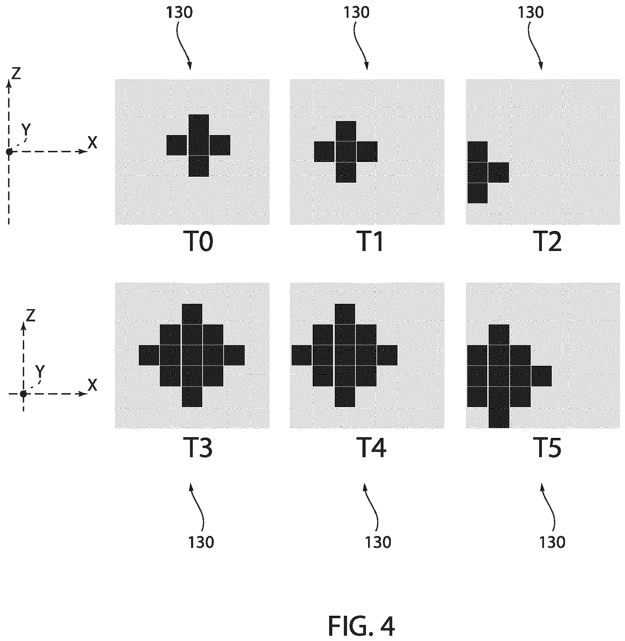

With reference to Figures 3 and 4, the sensors 110 are associated with respective wheels 4, 5 and are designed to detect respective driving speed values v3 of the motor vehicle 1.

Each sensor 110 comprises, in particular:

- an emitter 115 configured to emit a laser signal R; and
- one or more single-photon avalanche diodes 111 a (also known as SPADs) configured to detect the laser signal R emitted by the emitter 115.

The emitter 115 of each sensor 110 is carried by the relative wheel 4, 5.

The single-photon avalanche diodes 111 are carried by wheelhouses 116 of the body 2 facing corresponding wheels 4, 5.

The control unit 20 is further programmed to process a second temporary value of the driving speed v2 of the wheel 4, 5, based on a plurality of images 130 representative of the position of the emitter 115 relative to the single-photon avalanche diodes 11 in different time instants consecutive to one another.

The control unit 20, more in particular, is programmed to:

- process a plurality of images 130 associated with respective time instants of the relative motion between emitter 15 and single-photon avalanche diodes 111, based on respective signals generated by the single-photon avalanche diodes 111 in corresponding time instants; and
- process a value of the driving speed v2 of the wheel 4, 5 based on said images 130.

With reference to figure 4, the timely progression of the images 130 in the respective instants T0, T1, T2, .., T5 is associated with the timely development of the speed components V2 of the emitter 115 and, hence, of the wheel 4, 5 along the direction X, Z. Since the wheel 4, 5 rotates around a respective axis parallel to the axis Y, the speed component V2 along the axis Y substantially is zero.

In other words, the control unit 20 uses the information acquired by the sensor 10 to calculate the driving speed v2 according to a technique known as optical flow.

More precisely, the control unit 20 is programmed to process the temporary value of the driving speed v2 based on the driving speeds v3 detected by the sensors 110 according to an algorithm, which is not part of the invention and, therefore, is not described in detail.

Finally, the control unit 20 is programmed to process the value of the driving speed v of the wheel 4, 5 based on the driving speed values v1 and v2 according to an algorithm, which is not part of the invention and, therefore, is not described in detail.

It should be pointed out that the motor vehicle 1 could comprise the sole sensor 10 or both sensors 10, 110.

In use, the control unit 20, with reference to Figure 5:

- processes a temporary value V1 of the driving speed of the motor vehicle 1, based on the time needed by the laser signal R to move from the emitter 15 of the sensor 10 to the road surface 16 and from the latter to the single-photon avalanche diodes 11, once it has been reflected by the road surface 16;
- processes a temporary value v2 of the driving speed of the wheel 4, 5, based on a plurality of images 130 representative of the position of the emitter 115 relative to the single-photon avalanche diodes 111 of the sensor 110 in different time instants; and
- processes a final value v of the driving speed of the wheel 4, 5, based on the temporary speeds v1, v2.

More in detail, the emitter 15 emits the pulsed laser signal R, which goes through the optical system 50 and is reflected by the road surface 16 as laser signal S.

After that, the laser signal S goes through the optical system 51 and reaches the single-photon avalanche diodes 11.

The single-photon avalanche diodes 11 receive the laser signal S and generate a current i associated with the number of detected photons, namely with the intensity of the laser signal S.

The electronic circuit 200 of the control unit 20 receives, as an input, the current i generated by the single-photon avalanche diodes 11 and generates, as an output, the voltage V.

The circuit 201 provides, as an output, a time signal associated with the time of arrival of the laser signal S received by the single-photon avalanche diodes 11.

More in particular, for two different time instants t1, t2, the control unit 20 receives an impulse train from the circuit 201; represents the aforesaid impulse train as an associated histogram 300 having, on the horizontal axis, the time of arrival and, on the vertical axis, the number of accumulated photons; and associates a peak of the histogram 300 with a respective value $\Delta T1$, $\Delta T2$ of the time interval between the emission of the laser signal R and the reception of the laser signal S.

The control unit 20 processes, in particular, the distance d1, d2 parallel to the axis X between the sensor 10 and the reference point P on the road surface 16 as $c*\Delta T1$, $c*\Delta T2$, wherein c is the speed of light and $\Delta T1$, $\Delta T2$ is the time interval between the emission of the laser signal R and the reception of the laser signal S.

The control unit 20 also processes the value of the driving speed v1 as $v1 = \frac{d2-d1}{t2-t1}-$ .

For each wheel 4, 5, the control unit 20 further processes a plurality of images 130 associated with respective time instants of the relative motion between emitter 115 and single-photon avalanche diodes 111, based on respective signals generated by the single-photon avalanche diodes 111 in corresponding time instants T0, T1, .. , T5; and processes a value of the driving speed v3 of the motor vehicle 1, based on the images 130.

With reference to Figure 5, the control unit 20 processes the temporary value of the driving speed v2 based on the driving speeds v3 detected by the sensors 110.

Finally, the control unit 20 processes the value of the driving speed v of the motor vehicle 1, based on the temporary driving speed values v1 and v2 according to an algorithm, which is not part of the invention and, therefore, is not described in detail.

The disclosure above reveals evident advantages that can be obtained with the invention.

In particular, the control unit 20 processes the speed value v of the motor vehicle 1 based on the temporary speeds v1, v2 determined starting from the intensity of the laser signal S reflected by the road surface 16 and detected by the single-photon avalanche diodes 11 of the sensor 10, respectively, and on the images 130 associated with the laser signal R emitted by the emitter 115 and detected by the single-photon avalanche diodes 111 of the sensor 110.

Thanks to the fact that the single-photon avalanche diodes 11, 111 have one single photon, the speed v and the timely development thereof can be processed in a quick and precise manner.

This ensures that that stability and anti-lock systems mentioned in the introduction to the description have a precise operation and offer a quick response to changes in the dynamic conditions of the motor vehicle 1, with evident advantages in terms of driving safety of the motor vehicle 1.

The control unit 20 processes the speed v based both on the temporary speed v1 obtained by means of the sensor 10, which creates a "direct time of flight", and on the temporary speed v2 obtained by means of the sensor 110, which uses a technique known as "optical flow".

This increases the precision and the reliability of the processed speed value v.

Finally, the motor vehicle 1 and the method according to the invention can be subjected to changes and variations, which, though, do not go beyond the scope of protection set forth in the appended claims.

In particular, the emitters 115 could be arranged on the wheelhouses 106 associated with respective wheels 3, 4 and the single-photon avalanche diodes 111 could be arranged on respective wheels 3, 4.

## Claims

1. A motor vehicle (1) comprising:

   - a body (2) defining a passenger compartment (3);
   - a plurality of wheels (4, 5); and
   - a first sensor (10) designed to detect a value (v) associated with a driving speed of said motor vehicle (1);

   said first sensor (10, 110) comprising, in turn:

   - a first emitter (15) configured to emit a first laser signal (R);
   - one or more first single-photon avalanche diodes (SPAD) (11) configured to detect said first laser signal (R) or a second laser signal (S) generated, in use, by the reflection of said first laser signal (R); and
   - a control unit (20) programmed to process said value (v) associated with a driving speed of said motor vehicle (1) based on said first laser signal (R, S) detected, in use, by said first photodetectors (11);

   **characterized in that** said control unit (20) is programmed to:

   - acquire a first value of the distance (d1) between said first sensor (10) and a reference point (P) on said road surface (16) in a first time instant (t1), based on a first value associated with the intensity detected by the relative photodetector (11);
   - acquire a second value of the distance (d2) between said first sensor (10) and said reference point (P) on said road surface (16) in a second time instant (t2), based on a second value associated with the intensity detected by the relative photodetector (11); and
   - process a first temporary value (v1) of the driving speed (v), based on said first and second distance values (d1, d2) and on the difference between said first and second time instants (t1, t2).

2. The motor vehicle according to claim 1, **characterized in that** said second laser signal (S) corresponds, in use, to the reflection of said first laser signal (R) against the road surface (16).

3. The motor vehicle according to claim 1, **characterized in that** it comprises:

   - a sprung mass comprising said body (2) and supporting said first emitter (15) and said first photodetectors (11); and

- an unsprung mass comprising said wheels (4, 5) and elastically connected to said sprung mass.

4. The motor vehicle according to claim 3, **characterized in that** said control unit (20) is programmed to process said value (v) associated with said driving speed based on at least one of the intensity of said second laser signal (S) and the time elapsing, in use, between a first instant, in which said first laser signal (R) is emitted, and a second instant, in which said second laser signal (S) is detected;
said intensity being associated with the number of photons detected, in use, by said photodetectors (11).

5. The motor vehicle according to any one of the preceding claims, **characterized in that** said sensor (10) comprises:

   - an electronic circuit (200) configured to receive, as an input, a current (i) generated by a first photodetector (11) and to generate, as an output, a voltage (V); and
   - a time measuring circuit (201) configured to provide a time signal associated with the time of reception of said second laser signal (D) by said first photodetector (11).

6. The motor vehicle according to claim 5, **characterized in that** the control unit (20) is programmed to:

   - receive an impulse train from the circuit (201);
   - represent said impulse train as an associated histogram (300) having, on the horizontal axis, the time of arrival and, on the vertical axis, the number of accumulated photons;
   - associate a peak of the histogram (300) with a value ($\Delta T1$, $\Delta T2$) of the time interval between the emission of said first laser signal (R) and the reception of said second laser signal (S); and
   - process said first and second distance values (d1, d2) as c*$\Delta T1$, c*$\Delta T2$, wherein c is the speed of light and $\Delta T1$, $\Delta T2$ is said time interval between the emission of said first laser signal (R) and the reception of said second laser signal (S).

7. The motor vehicle according to any one of the preceding claims, **characterized in that** it comprises a second sensor (110);
said second sensor (110) comprising, in turn:

   - a second emitter (115) arranged on one of said body (2) and a relative wheel (4, 5); and
   - a second photodetector (111) arranged on the other one of said body (2) and a relative wheel (4, 5).

8. The motor vehicle according to claim 7, **characterized in that** said control unit (20) is programmed, for at least one wheel (4, 5), to:

   - process a plurality of images (130) associated with respective time instants (T0, T1, .. , T5) of the relative motion of said wheel (4, 5) relative to said second emitter (115), based on respective signals generated by said second sensor (10) in corresponding time instants; and
   - process a second temporary value (v2) of the driving speed of said motor vehicle (1), based on said images.

9. The motor vehicle according to claim 7 or 8, **characterized in that** it comprises a plurality of said second sensors (110), each associated with a relative wheel (4, 5) and each designed to detect a relative third temporary value (v3) of the driving speed of the relative wheel (4, 5);
said control unit (20) being programmed to process said second temporary value (v2) of the driving speed of said motor vehicle (1), based on said third temporary values (v3).

10. motor vehicle according to claim 8 or 9, **characterized in that** said control unit (20) is programmed to process said value of the driving speed (v) of said motor vehicle (1), based on one of said temporary values (v1, v2) of the driving speed (v) or based on a combination of said temporary values (v1, v2) of the driving speed (v).

11. A method to detect the speed (v) of a motor vehicle (1), comprising the steps of:

   i) detecting, by means of a first sensor (10), the driving speed (v) of said motor vehicle (1);
   ii) emitting a first laser signal (R) by means of a first emitter (15, 115);
   iii) detecting said second laser signal (S, T) generated by the reflection of said first laser signal (R), by means of one or more first single-photon avalanche diode (SPADs) (11) of said first sensor (10); iv) reflecting said first laser signal (R) on a road surface (16);
   v) generating said second laser signal (S) following the reflection of said first laser signal (R) on said road surface (16);
   **characterized in that** it comprises the steps of:

   vi) acquiring a first value of the distance (d1) between said first sensor (10) and a reference point (P) on said road surface (16) in a first time instant (t1), based on a first value associated with the intensity of said first laser signal (R) detected by the relative first photodetector (11);

vii) acquiring a second value of the distance (d2) between said first sensor (10) and said reference point (P) on said road surface (16) in a second time instant (t2), based on a second value associated with the intensity of said first laser signal (R) detected by the relative photodetector (111); and

viii) processing a first temporary value (v1) of the driving speed (v), based on said first and second distance values (d1, d2) and on the difference between said first and second time instants (t1, t2).

12. The method according to claim 11, **characterized in that** said step i) comprises the steps of:

ix) generating said laser signal (R) by means of a second emitter (115) arranged on one (4, 5) of said body (2) and a relative wheel (4, 5); and

x) detecting said laser signal (R) by means of a second photodetector (11) arranged on the other one (2) of said body (2) and a relative wheel (4, 5);

said method comprising the steps of:

xi) processing a plurality of images (130) associated with respective time instants (TO, T1, .. T5) of the relative motion of said wheel (4, 5) relative to said second emitter (115) on respective signals generated by said second sensor (110) in corresponding time instants; and

xii) processing a second temporary value (v2) of the driving speed of said motor vehicle (1), based on said images (130).

13. The method according to claim 12, **characterized in that** it comprises the step xiii) of processing said value of the driving speed (v) of said motor vehicle (1), based on one of said temporary values (v1, v2) of the driving speed (v) or based on a combination of said temporary values (v1, v2) of the driving speed (v).

14. A computer product loadable into a control unit (20) and designed, when it is executed, to implement the steps of a method according to any one of the claims from 11 to 13.

FIG. 1

FIG. 2

FIG. 3

EP 4 361 680 A2

FIG. 4

FIG. 5

EP 4 361 680 A2

12

**REFERENCES CITED IN THE DESCRIPTION**

**Patent documents cited in the description**

- IT 102022000022347